(19) Europäisches Patentamt
European Patent Office
Office européen des brevets

(11) Veröffentlichungsnummer: **0 462 505 A2**

(12) **EUROPÄISCHE PATENTANMELDUNG**

(21) Anmeldenummer: **91109670.9**

(22) Anmeldetag: **13.06.91**

(51) Int. Cl.5: **C08L 71/12**, C08L 33/06, C09D 133/06, C08F 220/12

(30) Priorität: **20.06.90 DE 4019626**

(43) Veröffentlichungstag der Anmeldung: **27.12.91 Patentblatt 91/52**

(84) Benannte Vertragsstaaten: **AT BE CH DE DK ES FR GB IT LI NL SE**

(71) Anmelder: **RÖHM GMBH**
**Kirschenallee**
**W-6100 Darmstadt(DE)**

(72) Erfinder: **Fischer, Jens-Dieter, Dr.**
**Ernst-Ludwig-Weg 44**
**W-61901 Bickenbach(DE)**
Erfinder: **Siol, Werner, Dr.**
**Goerdelerweg 17**
**W-6100 Darmstadt-Eberstadt(DE)**

# (54) Verträgliche Polymermischungen.

(57) Die Erfindung betrifft Polymermischungen PM bestehend aus
A) 0,5 - 99,5 Gew.-% eines Polyphenylenethers, aufgebaut aus Einheiten der Formel (I)

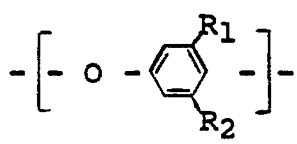

I

wobei
$R_1$ für einen gegebenenfalls cyclischen Alkylrest oder Alkoxylrest mit 1 bis 8 Kohlenstoffatomen oder einen gegebenenfalls substituierten Arylrest mit 6 bis 10 Kohlenstoffatomen oder für Chlor
$R_2$ für einen gegebenenfalls cyclischen Alkylrest oder Alkoxylrest mit 1 - 8 Kohlenstoffatomen oder einen gegebenenfalls substituierten Arylrest mit 6 - 10 Kohlenstoffatomen oder für Chlor
steht, und
B) 99,5 - 0,5 Gew.-% eines Polyaryl(meth)acrylats enthaltend 20 - 100 Gew.-% an Monomeren der Formel (II)

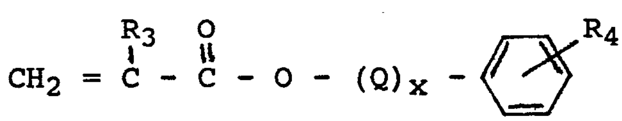

(II)

wobei
$R_3$ für Wasserstoff oder Methyl,
Q für einen Alkylidenrest mit 1 bis 6, vorzugsweise 1 bis 4 Kohlenstoffatomen, oder einen Rest $-(CH_2)_m-O-$, worin m eine Zahl von 2 bis 6 bedeutet, und
x für null oder 1 und

EP 0 462 505 A2

$R_4$ für Wasserstoff oder für einen Alkyl- oder Alkoxylrest mit 1 bis 6 Kohlenstoffatomen oder ein Aminoalkylrest mit 1 bis 6 Kohlenstoffatomen, der am Stickstoff mit Alkylresten mit 1 bis 6 Kohlenstoffatomen substituiert sein kann, steht.

Gebiet der Erfindung

Die Erfindung betrifft verträgliche Polymermischungen aus Polyphenylenether und Copolymerisaten aus (Meth)acrylsäureestern mit Phenylgruppen in den Seitenketten.

Stand der Technik

Die empirischen Erfahrungen bei Mischungsversuchen mit unter sich verschiedenen Polymeren wurden bereits 1947 auf den vielfach zitierten Nenner gebracht: "Miscibility is the exception; immiscibility is the rule". (Vgl. Kirk-Othmer, 3rd Ed., Vol., 18, 443 - 478, 460 ff, J. Wiley 1982).
Eine solche Ausnahme bildet z.B. das verträgliche System aus Polyphenylenether (PPE) und Polystyrol (PS). PPE/PS-Blends weisen über die gesamte Mischungsbreite **eine** Glastemperatur auf und sind transparent. Sie stellen eines der ersten literaturbekannten Beispiele für verträgliche Polymermischungen dar. (Vgl. T.K.Kwei, H.L. Frisch, Macromolecules 11, 1267 (1978); Kirk-Othmer loc.cit, Vol. 18, 594 - 605, 603 ff).
Weiter bilden Poly-2,6-dimethyl-1,4-phenylenoxide (DMPPO) und Polystyrol verträgliche Polymermischungen [Vgl. S. Krause, J. Macromol. Sci. Rev. Macromol. Chem. 7, 251 (1972); Brandrup-Immergut, Polymer Handbook 3rd Ed.,VI-347, J. Wiley, (1989).
Ausgehend von diesen Erkenntnissen wurde eine Fülle von Arbeiten auf die Schlagzähmodifizierung des sprödbrechenden PPE mit Elastomerphasen verwandt, die mit PS bzw. Styrolcopolymerisaten gepfropft waren. Als Schlagzäh-Modifizierungsmittel werden bevorzugt Blockpolymere wie Polystyrol-b-Polybutadien, ABS-Terpolymere und SAN-gepfropfte Elastomerphasen eingesetzt.

Aufgabe und Lösung

Ein grundlegender Nachteil von reinem PPE sowie der oben genannten Mischungen ist die extreme Labilität gegenüber UV- und sichtbarem Licht mit der Konsequenz einer notorischen Unbeständigkeit unter Witterungseinflüssen. So zeigt z.B. ein PPE/Polyamid-Blend als Handelsprodukt schon nach 500 Stunden Xenotest-Schnellbewitterung einen starken Gelbstich und eine matte Oberfläche.
Polyaryl(meth)acrylate haben sich als mit Polycarbonaten (DE-A 37 19 239) und mit Polyestern (unveröffentlichte deutsche Patentanmeldung P 40 03 088.1) verträglich erwiesen. Dabei bietet sich als Modellvorstellung für die Ursache der Verträglichkeit eine Elektron-Donor-Akzeptor-Wechselwirkung zwischen Polyester bzw. Polycarbonat als Akzeptor und Polyaryl(meth)acrylat als Donor an. Angesichts der oben dargelegten Instabilität des PPE und seiner Derivate, auch in den vorgeschlagenen Polymermischungen bestand die Aufgabe, Produkte zur Verfügung zu stellen, die diese Instabilität vermeiden, möglichst ohne gleichzeitige Qualitätsminderung hinsichtlich der übrigen Eigenschaften der Komponenten. Es wurde nun gefunden, daß überraschenderweise bestimmte Polyphenylenether mit Polyaryl(meth)acrylaten verträgliche Polymermischungen bilden. Dieser Sachverhalt ist umso unerwarteter als man im Sinne der oben erläuterten Modellvorstellung für Polyphenylenether dieses Typs Donor-Eigenschaften erwartet hätte, d.h. eine Elektron-Donor-Akzeptor-Wechselwirkung mit dem ebenfalls als Donor wirkenden Polyaryl(meth)acrylat mußte als a priori unwahrscheinlich erscheinen.

Die Erfindung betrifft somit
verträgliche Polymermischungen PM bestehend aus

A) 0,5 - 99,5 Gew.-%, vorzugsweise 50 bis 90 Gew.-% eines Polyphenylenethers, aufgebaut aus Einheiten der Formel (I)

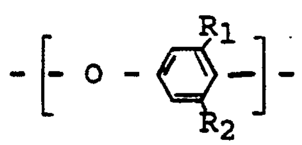

I

wobei

$R_1$ für einen gegebenenfalls cyclischen Alkylrest oder Alkoxylrest mit 1 bis 8 Kohlenstoffatomen oder einen gegebenenfalls substituierten Arylrest mit 6 bis 10 Kohlenstoffatomen oder für Chlor,

$R_2$ für einen gegebenenfalls cyclischen Alkylrest oder Alkoxylrest mit 1 - 8 Kohlenstoffatomen oder einen gegebenenfalls substituierten Arylrest mit 6 - 10 Kohlenstoffatomen oder für Chlor

steht, und

B) 99,5 - 0,5 Gew.-%, vorzugsweise 50 bis 10 Gew.-% eines Polyaryl(meth)acrylats enthaltend 20 - 100 Gew.-% an Monomeren der Formel (II)

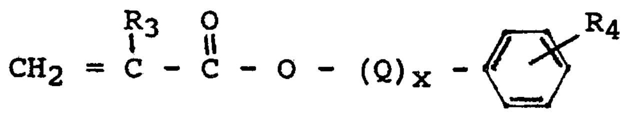 (II)

wobei

- $R_3$ für Wasserstoff oder Methyl,
- Q für einen Alkylidenrest mit 1 bis 6, vorzugsweise 1 bis 4 Kohlenstoffatomen, oder einen Rest $-(CH_2)_m-O-$, worin m eine Zahl von 2 bis 6 bedeutet, und
- x für null oder 1 und
- $R_4$ für Wasserstoff oder für einen Alkyl- oder Alkoxylrest mit 1 bis 6 Kohlenstoffatomen oder einen Aminoalkylrest mit 1 bis 6 Kohlenstoffatomen, der am Stickstoff mit Alkylresten mit 1 bis 6 Kohlenstoffatomen substituiert sein kann, steht.

Die Polymeren A)

Die Polymeren A) sind an sich bekannt (vgl. Kirk-Othmer loc.cit). Teilweise stellen sie Handesprodukte dar. Sofern $R_1$ bzw. $R_2$ die Bedeutung eines Arylrests besitzten handelt es sich vorzugsweise um einen Phenyl-, Benzyl- oder Naphthylrest, bei den gegebenenfalls vorhandenen Substituenten am Arylrest um C1-C4-Alkylreste. Besonders genannt seien die Polyphenylenether in denen beide Reste $R_1$ und $R_2$ für Methyl oder für Phenyl stehen. (Poly-2,6-dimethyl-1,4-phenylenoxid = Verbindung A-1; und Poly-2,6-diphenyl-1,4-phenylenoxid = Verbindung A-2).

Desweiteren seien genannt:

Poly-2-phenyl-6-methyl-1,4-phenylenoxid (Verbindung A-3) Poly-2-benzyl-6-methyl-1,4-phenylenoxid (Verbindung A-4) Poly-2-isopropyl-6-methyl-1,4-phenylenoxid (Verbindung A-5)

Poly-2,6-dimethoxy-1,4-phenylenoxid (Verbindung A-6) Poly-2,6-dichloro-1,4-phenylenoxid (Verbindung A-7) Poly-2-m-tolyl-6-phenyl-1,4-phenylenoxid (Verbindung A-8) Poly-2-p-tolyl-6-phenyl-1,4-phenylenoxid (Verbindung A-9) Poly-2-(4-tert.butyl)phenyl-6-phenyl-1,4-phenylenoxid (Verbindung A-10)

Poly-2-α-naphthyl-6-phenyl-1,4-phenylenoxid (Verbindung A-11)

Die terminalen Positionen können wie üblich durch entsprechende Arylgruppen oder durch Acylierung (Acetylierung) verschlossen sein.

Zur Herstellung der Polyphenylenether kann man sich verschiedener Verfahren bedienen, u.a. der oxidativen Kupplung. So wird das Polymer A-1 technisch durch Polykondensation von 2,6-Dimethylphenol in Gegenwart basischer Kupfer-Amin-Komplexe gewonnen. Auch Copolymere, die aus verschiedenen Monomereinheiten der Formel I aufgebaut sind, sind möglich.

Die Molgewichte der Polyphenylenether liegen in der Regel im Bereich Mn = 1 000 - 20 000.

Mit Ausnahme des Polymeren A4 (Tg = 99 Grad C) weisen die oben genannten Polymeren A)-Glastemperaturen > 140 Grad C, überwiegend sogar > 200 Grad C auf. (Vgl. Kirk-Othmer, loc.cit.).

Die Polymeren B)

Die Polymeren B) sind aus gegebenenfalls verschiedenen, an sich bekannten Monomeren der Formel II aufgebaut. Am Aufbau können noch zusätzlich radikalisch polymerisierbare Monomere, vorzugsweise der Formel III

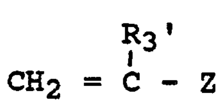 III

in Anteilen von 80 - 0 Gew.-%, vorzugsweise 50 bis 5 Gew.-% beteiligt sein, wobei

$R_3'$ für Wasserstoff oder Methyl und

Z für einen gegebenenfalls mit C1-C4-Alkyl-substituierten Phenylrest, oder für einen Rest

$$-\overset{\overset{\displaystyle O}{\|}}{C}-OR_5,$$

worin $R_5$ für einen gegebenenfalls verzweigten Alkylrest mit 1 bis 8 Kohlenstoffatomen oder einen Cyclohexylrest oder für einen Rest

$$-O-\overset{\overset{\displaystyle O}{\|}}{C}-R_6,$$

worin $R_6$ für Methyl oder Ethyl bedeutet, steht, und wobei sich die Monomeren der Formeln II und III zu 100 Gew.-% ergänzen.

Genannt seien als Monomere der Formel II:

Phenyl(meth)acrylat, 4-tert.Butylphenyl(meth)acrylat, 4-Methoxyphenyl(meth)acrylat, Benzyl(meth)-acrylat, 1-Phenylethyl(meth)acrylat, 2-Phenylethyl(meth)acrylat, 3-Phenylpropyl(meth)acrylat, 2-Phenoxyethyl(meth)acrylat, 2-Naphthyl(meth)acrylat.

Als Monomeren der Formel III seien genannt:

Methylmethacrylat,
Styrol, α-Methylstyrol
Vinylacetat, Vinylpropionat

Die Herstellung der Polymerisate bzw. Copolymerisate B) wird nach den bekannten Verfahren zur Polymerisation α,β-ungesättigter Verbindungen, insbesondere der radikalischen Polymerisation beispielsweise in Substanz oder in Lösung, als Emulsions- oder als Suspensionspolymerisation durchgeführt. (Vg. H. Rauch-Puntigam, Th. Völker, Acryl- und Methacrylverbindungen, Springer Verlag 1967; Houben-Weyl, 4. Auflage, Bd. XIV/I, 66, 1010 Georg Thieme 1961; Bd. XXE, 1141 - 1176, Georg Thieme 1987). Infrage kommt auch die Methode der Group-Transfer-Polymerisation. Bei der radikalischen Polymerisation finden vorzugsweise die üblichen radikalischen Initiatoren, beispielsweise peroxidische, insbesondere organische Peroxidverbindungen wie Dibenzoylperoxid oder Dilauroylperoxid, Azoverbindungen wie Azodiisobutyronitril oder gegebenenfalls Redoxinitiatoren in Mengen von gewöhnlich ca. 0,01 bis 2 Gew.-% bezogen auf die Monomeren, Anwendung.

Die Startradikale können jedoch auch durch energiereiche Strahlung erzeugt werden.
In der Regel besitzen die Polymerisate bzw. Copolymerisate B) Molgewichte Mw im Bereich von 5 000 bis 1 000 000 Dalton, vorzugsweise im Bereich 25 000 bis 250 000, insbesondere 50 000 bis 150 000 Dalton. Die Uneinheitlichkeit liegt im allgemeinen im Bereich 0,1 - 10. Die Bestimmung des Molekulargewichts wird vorzugsweise mit der Gel-Permeationschromatograpie oder mit der Streulicht-Methode vorgenommen (vgl. H.F. Mark et al., Ed. Encyclopedia of Polymer Science and Technology 2nd Ed. Vol. 10, 1 - 19, J. Wiley 1987).
Im Einklang mit einer bevorzugten Ausführungsart ergibt sich die reduzierte Viskosität $n_{spec/c}$ (nach DIN 51 562) in Chloroform zu 18 - 65 ml/g, vorzugsweise 30 - 50 ml/g.

Als Molekulargewichtsregeler können an sich bekannte Regler, insbesondere die üblichen Schwefelregler, beispielsweise Mercaptoverbindungen Anwendung finden (vgl. Houben Weyl loc.cit, Bd. XIV/I, S. 66). Im allgemeinen genügt ein Reglerzusatz von 0,1 bis 0,5 Gew.-% bezogen auf die Monomeren.

Eine weitere, günstige Ausführungsart der Erfindung sieht Mischungen PM' aus 95 - 5 Gew.-% des Polyphenylenethers gemäß A) nach Patentanspruch 1 und 5 - 95 Gew.-% eines zweiphasischen Mischpolymerisats C) als Schlagzähmodifizierungsmittel vor enthaltend als Bestandteil ein mit dem Polyphenylenether verträgliches Polymer PK2, das in seiner Zusammensetzung den Polymeren B) gemäß Anspruch 1 entspricht, wobei das zweiphasige Mischpolymerisat C) besteht aus:

c1) 20 - 90 Gew.-%, vorzugsweise 30 - 50 Gew.-% eines gegebenenfalls vernetzten Polymeren PK1 mit einer Glastemperatur Tg < 10 Grad C, bevorzugt < -10 Grad C und

c2) 80 - 10 Gew.-%, vorzugsweise 70 - 50 Gew.-% eines mit c1), wenigstens teilweise, vorzugsweise zu > 50 Gew.-% kovalent verknüpften Polymeren PK2 entsprechend der Zusammensetzung des Polymeren B) gemäß Anspruch 1 (wobei sich die Polymerkomponenten PM' zu 100 Gew.-% ergänzen wie auch die Komponenten C1) und C2) im Mischpolymerisat C).

Das Polymere PK1 ist dabei vorteilhaft aufgebaut aus einem oder mehreren Monomeren der Formel III, mit der Maßgabe, daß die resultierende Glastemperatur der Bedingung Tg < 10 Grad C genügt. Die Beiträge der Monomeren zur Glastemperatur können nach "Vieweg-Esser, Kunststoff-Handbuch Bd. IX, Polymethacrylate, S. 333 - 340, Carl Hanser Verlag 1975, bzw. F.H. Mark et al. Encyclopedia of Polymer Science and Technology 2nd. Ed. Vol. 7, pg. 531 - 544, J. Wiley 1987; Brandrup-Immergut Polymer Handbook 3rd. Ed. VI-209, J. Wiley 1989" vorherberechnet werden. Als Monomere bzw. Monomerkomponente der Polymeren PK1 seien z.B. genannt Butadien, 1,5-Octadien, Kombinationen aus Ethylen, Propylen sowie Dienen und Butylacrylat.

Die Polymeren PK1 können noch 0,1 bis 10 Gew.-% an vernetzenden Monomeren enthalten, beispielsweise mehrfunktionale Monomere der einschlägig verwendeten Art (vgl. Rauch-Puntigam u. Völker, loc.cit., S. 184).

Das Molgewicht Mn der Polymeren PK1 (im unvernetzten Zustand) liegt im Bereich $10^4$ bis $5 \cdot 10^5$.
Vorteilhafterweise ist die Polymerkomponente PK2 aufgebaut aus Monomerenzusammensetzungen nach B).

Das Molgewicht Mn der Polymeren PK2 liegt im Bereich $10^4$ bis $10^6$.

Desweiteren besteht eine vorteilhafte Ausführungsart der vorliegenden Erfindung aus einem Copolymerisat D) bestehend aus

d1) 99,9 bis 50 Gew.-%, vorzugsweise 99 bis 80 Gew.-% an Comonomeren, die das Copolymer B) nach Anspruch 1 bilden und

d2) 0,1 - 50 Gew.-%, vorzugsweise 1 bis 20 Gew.-% an Comonomeren mit UV-Licht absorbierenden Gruppen (UV-K1) und/oder niedermolekularen UV-Absorbern (UV-K2)

wobei das Copolymerisat D) als Deckschicht auf den in der Regel UV-labilen Polyphenylether-Substraten oder auf den Polymergemischen, die Polyphenylenether enthalten, zur Anwendung kommt. Die Komponenten d1) + d2) ergänzen sich dabei im Copolymerisat D) zu 100 Gew.-%.

Die UV-Licht absorbierenden Monomeren UV-K1, bzw. die niedermolekularen UV-Absorber UV-K2 weisen ein hohes Absorptionsvermögen (Transmission < $10^{-4}$) im Bereich zwischen 290 und 400 nm auf.
Die UV-Licht absorbierenden Comonomeren UV-K1 und die geeigneten Copolymerisationsbedingungen können beispielsweise der DE-C 33 12 611 bzw. der US-A 4 576 870, der GB-B 2 146 647 und der US-A 4 612 358 bzw. der US-A 4 652 656 entnommen werden.
Genannt seien insbesondere Benztriazol-(meth)acrylamide, unter den letztgenannten US-Patenten insbesondere das 3-(2-Benzotriazolyl)-2-Hydroxy-5-tert.-octylbenzylmethacrylamid.

Geeignete UV-Licht-absorbierende niedermolekulare Zusätze UV-K2 lassen sich z.B. der Literaturstelle H. Batzer Ed. Polymere Werkstoffe Bd. III, Technologie 1, S. 395 - 404, Georg Thieme-Verlag 1984, bzw. R. Gächler und H. Müller, Taschenbuch der Kunststoff-Additive, S. 105 - 143, C. Hanser Verlag 1979; F. Mark et al. Encyclopedia of Polymer Science & Technology 2nd Ed. Vol. 17, pg. 796 - 827, J. Wiley 1989; ibidem Vol. 15, pg. 539 - 583, J. Wiley 1989 entnehmen. Aus den beiden letztgenannten Literaturstellen geht auch die Durchführung der Bewitterungstests (Xenotest) hervor. Als besonders geeignete, niedermolekulare UV-Absorber UV-K2 seien Benztriazol- und/oder Benzophenon-Derivate genannt.

Kriterien der Verträglichkeit

Im Sinne der vorliegenden Erfindung und im Einklang mit den in der Praxis der Polymerchemie üblichen Vorstellungen sollen unter verträglichen Mischungen stabile, homogene Mischungen verstanden werden, die makroskopisch die Eigenschaf eines **einphasigen** Materials aufweisen. (Vgl. Kirk-Othmer, Vol. 18, pg. 446, 457 - 60; J. Brandrup & E.H. Immergut, "Polymer Handbook", 2nd Ed.)

Benutzt wird:

I) Die Beobachtung der Glastemperatur Tg.
Sofern die Polymerkomponenten Glastemperaturen besitzen, die weit genug auseinanderliegen um durch "Differential Scanning Calorimetry" (DSC), dilatometrisch, dielektrisch oder radioluminiszenzspektroskopisch unterschieden zu werden,zeigt sich vorhandene Verträglichkeit durch eine Verschiebung oder durch das Verschwinden der Tg's der Polymer-Einzel-Komponenten an. (Vgl. Olabisi et al. in Polymer-Polymer-Miscibiliity, pp. 21, 123, Academic Press 1979).

II) Die "optische Methode"
Dabei wird aus einer homogenen Lösung der Polymerkomponenten ein Film ausgegossen, der nach dem Trocknen auch bei Vergrößerung keine optisch wahrnehmbare Inhomogenität aufweisen darf.

III)Als ein weiterer Test auf die Mischbarkeit von unter sich verschiedenen Polymeren wird das Auftreten der unteren kritischen Lösungstemperatur (Lower Critical Solution Temperature = LCST) herangezogen. (Vgl. DE-A 34 36 476.5 und DE-A 34 36 477.3).

Das Auftreten der LCST beruht auf dem Vorgang, daß sich beim Erwärmen die bis dahin klare, homogene Polymermischung in Phasen auftrennt und optisch trübe bis opak wird. Dieses Verhalten stellt nach der Literatur einen eindeutigen Beweis dafür dar, daß die ursprüngliche Polymermischung aus einer einzigen, im Gleichgewicht befindlichen homogenen Phase bestanden hatte.
Die Polymermischungen PM gemäß der vorliegenden Erfindung zeigen nach allen vorliegenden Erfahrungen durchgängig eine LCST.

Herstellung der Mischungen PM

Die verträglichen Mischungen PM können durch die unterschiedlichen Verfahren hergestellt werden. Sie werden z.B. durch intensives mechanisches Vermischen der Komponenten A) und B) in der Schmelze, im Extruder, Kneter usw. erzeugt, oder sie können auch aus einem gemeinsamen Lösungsmittel heraus als sogenannte "solution cast polyblends" hergestellt werden (vgl. Kirk-Othmer "Encyclopedia of Chemical Technology" 3rd. Ed. Vol. 18, pg. 442 - 478, J. Wiley 1982). Man erzeugt in der Regel zunächst Mischungen der Komponenten A) und B), wobei vorteilhaft von Feststoffen in Form beispielsweise eines Granulats ausgegangen wird unter Verwendung langsam laufender Mischaggregate wie z.B. Trommel-, Rhönrad-, Doppelkammer-Pflugscharmischern. Die langsam laufenden Mischaggregate verursachen ein mechanisches Mischen, ohne daß die Phasengrenzen aufgehoben werden (vgl. Ullmanns Encyklopädie der Technischen Chemie, 4. Auflage, Bd. 2, pg. 282 - 311, Verlag Chemie). Anschließend erfolgt die thermoplastische Aufbereitung durch homogenes Mischen in der Schmelze unter Verwendung von heizbaren Mischaggregaten bei den dafür geeigneten Temperaturen, z.B. 150 bis unterhalb ca. 300 Grad C in Knetern wie dem Brabender-Kneter oder vorzugsweise Extrudern, z.B. Ein- oder Mehrschneckenextrudern oder gegebenenfalls in Extrudern mit oszillierender Schnecke und Scherstiften (z.B. im BUSSCO-Kneter). Analog erfolgt die Herstellung der Polymermischungen PM' aus den Komponenten A) und C). Beim Schmelzmischen ist auf jeden Fall darauf zu achten, daß die Schmelze nicht allzu hohen Temperaturen (T > 300 Grad C) ausgesetzt wird, da die Polymerlegierung zur Gelbfärbung neigt. Man kann nach diesen Verfahren Gleichkorngranulate (z.B. Heißabschlag, Würfelform, Rundkorn) herstellen. Die Korngröße der Granulate liegt dabei im Bereich 2 bis 5 mm. Die Beschichtung von Polyphenylenether-substraten mit den Copolymerisaten D) kann vorteilhafterweise wie folgt vorgenommen werden:
Das Copolymerisat wird mittels Lösungsmittel, vorteilhafterweise Toluol, auf das zu beschichtende Substrat als Lack aufgebracht mit einer Trockenfilmdicke, die gewährleistet, daß die UV-Licht-Transmission im Wellenlängenbereich 290 - 400 nm kleiner $10^{-4}$ beträgt. Als lösungsmittelfreie Auftragetechnologie wird vorteilhafterweise die Coextrusion gewählt.

Vorteilhafte Wirkungen

Die erfindunggemäßen (Co)polymerisate finden vor allem als Schlagzähmodifizierungsmittel für Polyphenylenether sowie als Deckschichten, die das Polyphenylenether-Substrat vor schädlicher UV-Betrahlung schützen, ihre Verwendung. Die Verträglichkeit der Deckschichten sorgt einerseits für gute Haftung derselben, andererseits sind beschichtete Substrate ohne Eigenschaftsverlust (der meistens durch Unverträglichkeit verursacht wird) in Substrat-Neuware wiedereinarbeitbar.

BEISPIELE

Die erfindungsgemäßen Polymerlegierungen wurden durch Schmelzmischen in einem Storck-Laborextruder bei 250 - 280 Grad C bzw. durch Mischen in Toluol-Lösung und anschließendem Ausgießen von Filmen, die 24 Stunden im Vakuum (1 mbar) getrocknet wurden, hergestellt.
Die im folgenden verwendeten Copolymerisate wurden durch Substanzpolymerisation hergestellt. Neben den angeführten Comonomeren wurden hierbei als Initiator 0,2 Gew.-% Dilauroylperoxid und 0,05 Gew.-%, 2,2'-Bis(tert.-Butylperoxy)butan und als Molekulargewichtsregler 0,4 Gew.-% Dodecylmercaptan verwendet. Polymerisiert wurde 24 Stunden im Wasserbad bei 50 Grad C. Zur Endpolymerisation wurde das Polymerisat 12 Stunden bei 110 Grad C getempert. Die mittleren Molekulargewichte Mw betragen zwischen 8 - 10 . $10^4$.

Beispiel 1

50 Gew.-% 2,6-Dimethyl-Polyphenylenether (PPE PT88, Hüls AG, MW = 35 000 aus Lösungsviskosität) wurden im Mischextruder mit 50 Gew.-% Polyphenylmethacrylat (PMA) gemischt. Die resultierende Polymerlegierung ist transparent und weist einen Trübungspunkt (LCST) von 135 Grad C auf (die LCST wurde visuell auf einer Kofler-Heizbank bestimmt).

Beispiel 2

10 Gew.-% PPE PT88 und 10 Gew.-% PMA wurden in jeweils 90 Gew.-% Toluol gelöst, die Lösungen wurden vereinigt und im Vakuum bei ca. 80 Grad C und 1 mbar zu einem Film mit 50 Gew.-% PPE PT88 und 50 Gew.-% PMA eingetrocknet. Die resultierende Polymerlegierung ist transparent und weist eine LCST von 145 Grad C auf.

Beispiel 3

50 Gew.-% PPE PT88 und 50 Gew.-% Copolymerisat, bestehend aus 50 Gew.-% Styrol und 50 Gew.-% Phenylmethacrylat, wurden gemäß Beispiel 1 auf dem Mischextruder abgemischt. Die resultierende transparente Polymerlegierung weist eine LCST von 113 Grad C auf.

Beispiel 4

10 Gew.-% PPE PT88 und 10 Gew.-% Copolymerisat gemäß Beispiel 3 wurden als Film der Zusammensetzung 50 Gew.-% PPE PT88 und 50 Gew.-% Copolymerisat gemäß Beispiel 2 gemischt und aufgearbeitet. Der transparente Film weist eine LCST von 114 Grad C auf.

Beispiel 5

50 Gew.-% PPE PT88 und 50 Gew.-% Copolymerisat, bestehend aus 75 Gew.-% p-Methoxyphenylmethacrylat (MPMA) und 25 Gew.-% Styrol, wurden gemäß Beispiel 1 abgemischt. Die resultierende transparente Polymerlegierung weist eine LCST von 130 Grad C auf.

Beispiel 6

10 Gew.-% PPE PT88 und 10 Gew.-% Copolymerisat gemäß Beispiel 5 wurden gemäß Beispiel 2 als Film der Zusammensetzung 50 Gew.-% PPE PT88 und 50 Gew.-% Copolymerisat hergestellt. Der Film ist transparent und weist eine LCST von 150 Grad C auf.

Beispiel 7

50 Gew.-% PPE PT88 und 50 Gew.-% Copolymerisat aus 50 Gew.-% MPMA und 50 Gew.-% Styrol wurden gemäß Beispiel 1 gemischt. Die resultierende Polymerlegierung weist eine LCST von 135 Grad C auf.

Beispiel 8

50 Gew.-% PPE PT88 und 50 Gew.-% Copolymerisat, bestehend aus 50 Gew.-% MPMA, 25 Gew.-% Styrol und 25 Gew.-% Methylmethacrylat wurden gemäß Beispiel 1 gemischt. Die transparente Polymerlegierung weist eine LCST von 117 Grad C auf.

Beispiel 9

10 Gew.-% PPE PT88 und 10 Gew.-% Benzylmethacrylat (BMA) wurden in jeweils 90 Gew.-% Toluol gelöst und gemäß Beispiel 2 als Film der Zusammensetzung 50 Gew.-% PPE PT88 und 50 Gew.-% BMA hergestellt. Die resultierende Polymerlegierung zeigt eine LCST von 116 Grad C.

Beispiel 10

10 Gew.% PPE PT88 und 10 Gew.-% Poly-3-phenylpropylmethacrylat (PPMA) wurden in jeweils 90 Gew.-% Toluol gelöst und gemäß Beispiel 2 als Film der Zusammensetzung 50 Gew.-% PPE PT88 und 50

Gew.-% PPMA hergestellt. Die transparente Polymerlegierung weist eine LCST von 70 Grad C auf.

Beispiel 11

10 Gew.-% PPE PT88 und 10 Gew.-% Polybenzylacrylat (BA) wurden in jeweils 90 Gew.-% Toluol gelöst und als Film der Zusammensetzung 50 Gew.-% PPE PT88 und 50 Gew.-% BA gemäß Beispiel 2 hergestellt. Der resultierende Film ist transparent und zeigt eine LCST von 105 Grad C.

Bewitterungsschutz für PPE bzw. PPE-Blends

Beispiel 12

Eine Stegdoppelplatte, bestehend aus einem Blend aus PPE und Polyamid (Noryl GTX, General Electric Plastics), wurde mit einer Mischung aus 45 Gew.-% Copolymerisat, bestehend aus 55 Gew.-% Styrol, 35 Gew.-% Benzylacrylat und 10 Gew.-% 3-(2-Benztriazolyl)-2-hydroxy-5-tert-octylbenzylmethacrylamid (polymerisierbarer UV-Absorber auf Benztriazol-Basis), und 55 Gew.-% 1-Methoxy-2-Propanol beschichtet. Die Trockenfilmdicke (Copolymerisat nach Verdampfen des Lösuemittels) betrug 7 µm. Nach 500 Stunden Xenotest-Schnellbewitterung (Grenzwellenlänge 290 nm) zeigt die Probe einen leichten, nach 1 000 Stunden einen merklichen und nach 1 500 Stunden einen starken Gelbstich. Die Haftung der Schicht ist sehr gut, sie weist im Gitterschnitt- und Tesa-Test keine Ablösung auf.

Beispiel 13 (Referenzbeispiel)

Eine unbeschichtete Stegdoppelplatte aus Noryl GTX weist nach 500 Stunden Xenotest-Schnellbewitterung einen starken Gelb- bis Braunstich und darüber hinaus eine matte Oberfläche, was auf ausgeprägte Erosion hindeutet, auf. Diese Bewitterungserscheinungen treten bei der beschichteten Probe nach Beispiel 12 nach 1 500 Stunden Xenotest noch nicht auf.

**Patentansprüche**

**1.** Verträgliche Polymermischungen PM bestehend aus

A) 0,5 - 99,5 Gew.-% eines Polyphenylenethers, aufgebaut aus Einheiten der Formel (I)

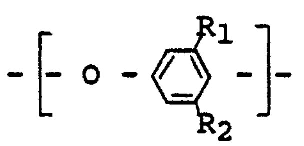

I

wobei

$R_1$ für einen gegebenenfalls cyclischen Alkylrest oder Alkoxylrest mit 1 bis 8 Kohlenstoffatomen oder einen gegebenenfalls substituierten Arylrest mit 6 bis 10 Kohlenstoffatomen oder für Chlor

$R_2$ für einen gegebenenfalls cyclischen Alkylrest oder Alkoxylrest mit 1 - 8 Kohlenstoffatomen oder einen gegebenenfalls substituierten Arylrest mit 6 - 10 Kohlenstoffatomen oder für Chlor

steht, und

B) 99,5 - 0,5 Gew.-% eines Polyaryl(meth)acrylats enthaltend 20 - 100 Gew.-% an Monomeren der Formel (II)

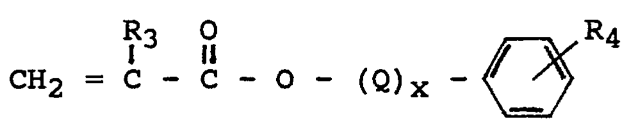

(II)

wobei

$R_3$ für Wasserstoff oder Methyl,
Q für einen Alkylidenrest mit 1 bis 6, vorzugsweise 1 bis 4 Kohlenstoffatomen, oder einen Rest $-(CH_2)_m-O-$, worin m eine Zahl von 2 bis 6 bedeutet, und
x für null oder 1 und
$R_4$ für Wasserstoff oder für einen Alkyl- oder Alkoxylrest mit 1 bis 6 Kohlenstoffatomen oder ein Aminoalkylrest mit 1 bis 6 Kohlenstoffatomen, der am Stickstoff mit Alkylresten mit 1 bis 6 Kohlenstoffatomen substituiert sein kann, steht.

2. Polymermischungen PM' enthaltend als Komponenten einen Polyphenylenether A) gemäß Anspruch 1 und ein aus Polymerkomponente B) nach Anspruch 1 aufgebautes als Schlagzähmodifizierungsmittel dienendes Mischpolymerisat C), dadurch gekennzeichnet, daß die Polymermischung PM' besteht aus:

95 - 5 Gew.-% an Polyphenylenether A) und 5 - 95 Gew.-% an dem zweiphasigen Mischpolymerisat C) aufgebaut aus
c1) 20 bis 90 Gew.-% eines gegebenenfalls vernetzten Polymeren PK 1 mit einer Glastemperatur Tg < 10 Grad C und
c2) 80 bis 10 Gew.-% eines wenigstens teilweise mit c1) kovalent verknüpften Polymern PK2, das in seiner Zusammensetzung dem Polymeren B) entspricht.

3. Copolymerisat D) zur Oberflächenbeschichtung von Polyphenylenether-Substraten gemäß Komponenten A) in Anspruch 1, dadurch gekennzeichnet, daß das Copolymerisat D) aus
d1) 99,9 - 50 Gew.-% an den das Copolymere B) bildenden Monomeren gemäß Anspruch 1 und
d2) 0,1 - 50 Gew.-% an Comonomeren mit UV-Licht absorbierenden Gruppen UV-K1 oder/und niedermolekularen UV-Absorbern UV-K2,
besteht.